# EUROPÄISCHE PATENTSCHRIFT

(11) **EP 1 598 277 B1**
(45) Veröffentlichungstag und Bekanntmachung des Hinweises auf die Patenterteilung: **25.07.2007**
(21) Anmeldenummer: 05010103.9
(22) Anmeldetag: 10.05.2005
(51) Int. Cl.: B65B 61/26, B41J 2/32, B65B 51/16, B29C 65/18

(54) **Durchlaufsiegelgerät**
Fed through sealing apparatus
Dispositif de scellement par passage guidé

(30) Priorität: 18.05.2004 DE 202004008007 U
(43) Veröffentlichungstag der Anmeldung: 23.11.2005
(73) Patentinhaber: Wolf, Hans, 74821 Mosbach-Sattelbach (DE); Wolf, Christian, 74821 Mosbach (DE)
(72) Erfinder: Wolf, Hans, 74821 Mosbach-Sattelbach (DE); Wolf, Christian, 74821 Mosbach (DE)
(74) Vertreter: Wolf, Günter

(56) Entgegenhaltungen:
- EP-A- 0 802 117
- EP-A- 1 211 179
- DE-U1- 29 916 381
- US-A- 5 560 595
- US-A1- 2004 079 243
- US-B1- 6 285 387
- PATENT ABSTRACTS OF JAPAN Bd. 2000, Nr. 08, 6. Oktober 2000 (2000-10-06) & JP 2000 128134 A (MARUTSUNE:KK), 9. Mai 2000 (2000-05-09)
- PATENT ABSTRACTS OF JAPAN Bd. 1999, Nr. 03, 31. März 1999 (1999-03-31) & JP 10 329344 A (TAISEI KIKAI:KK), 15. Dezember 1998 (1998-12-15)
- PATENT ABSTRACTS OF JAPAN Bd. 008, Nr. 102 (C-222), 12. Mai 1984 (1984-05-12) & JP 59 017957 A (SHIZUOKA SEIKI KK), 30. Januar 1984 (1984-01-30)

## Beschreibung

Die Erfindung betrifft ein Durchlaufsiegelgerät zum Schweißversiegeln der Öffnungsränder von mit Sterilgut gefüllten Verpackungsbeuteln aus verschweißbarer Kunststofffolie gemäß Oberbegriff des unabhängigen Patentanspruches 1.

Durchlaufsiegelgeräte sind bspw. nach dem DE-A-296 10 976 U1 bekannt und sofern solche Geräte, wie einleitend angegeben, mit einem Drucker gemäß DE-A-200 19 799 U1 ausgestattet sind, handelt es sich bei diesen Druckern in Verbindung mit solchen speziellen Durchlaufsiegelgeräten, soweit bekannt, ausschließlich um sogenannte Nadeldruckwerke oder auch gemäß PATENT AB-STRACT OF JAPAN Nr. 2000128134 um ein Durchlaufsiegelgerät das mit einem normalen auf ein einem Schreibmaschinenfarbband entsprechenden Farbband einwirkenden Druckwerk ohne Wärmewirkung arbeitet. Bei solchen Durchlaufsiegelgeräten handelt es sich ferner insofern um so genannte Halbautomaten, als dabei die gefüllten und zu versiegelnden Beutel von Hand in die seitlich offene Durchlaufführung angelegt und eingeschoben werden, in der dann unter Passage einer Folienvorheizung der Weitertransport mittels zweier Endlostransporte zwischen zwei Siegelrollen erfolgt, die die beiden benachbarten Öffnungsränder eines Beutels miteinander versiegeln. Daran schließt sich das Bedrucken des Siegelrandes bspw. mit inhaltsspezifischen Daten an, und zwar mittels des im Endbereich der Durchlaufführung im Gerätegehäuse mit angeordneten Nadeldruckers. Unter inhaltsspezifischen Daten sind dabei bspw. zu verstehen das Sterilisationsdatum, das Verfallsdatum, Chargennummer, sogenannte BAR-Codes und dgl. Daten.

Derartige Durchlaufsiegelgeräte haben sich hinsichtlich des Bedruckens der Beutelsiegelränder als verbesserbar erwiesen, d.h., das Durchlaufsiegelgerät soll besser und einfacher steuerbar sein, ein besseres Druckbild ergeben und auch variable Schriftgrößen und gewünschtenfalls auch den Druckübertrag von Graphikdarstellungen zulassen.

Diese Aufgabe ist an Siegelgeräten der eingangs genannten Art nach der Erfindung durch die im Kennzeichen des unabhängigen Patentanspruches 1 angeführten Merkmale gelöst.
vorteilhafte Weiterbildungen und Ausführungsformen sind in den abhängigen Patentansprüchen 2 bis 6 erfaßt.
Die Maßgabe der Distanzeinstellbarkeit des Thermodruckkopfes macht einen solchen überhaupt im vorliegenden Zusammenhang erst einsetzbar und zwar mit Rücksicht darauf, daß beim Beutelversiegeln unterschiedlich starke Siegelränder vorliegen oder entstehen können.

Solche,für den sogenannten Thermotransferdruck bestimmte, programmierbare Thermodrucker sind zwar bekannt, kommen aber, soweit bekannt, insbesondere für den Etikettendruck zur Verwendung, und zwar als separate Geräte, wobei die auf einem Trägerband mit gleichem Abstand befindlichen und zugeführten Etiketten fortlaufend mit den jeweils eingegebenen Daten durch thermische Beaufschlagung des Farbbandes mittels sogenannter "dots" bedruckt werden. Solche separaten Thermotransfer-Druckgeräte sind auch schon Ausstattungsgegenstand von bspw. Packtischen für die hier interessierende Sterilgutverpackung mittels der vorerwähnten Durchlaufsiegelgeräte, wobei allerdings die bedruckten Etiketten nach Ablösung von ihrem Trägerband auf die Siegelränder der versiegelten Verpackungsbeutel oder was auch immer übertragen werden müssen.
Einer unmittelbaren Übertragung dieser Thermotransferdruckmethode, die zu hervorragenden und dauerhaft haltbaren Druckergebnissen auch auf Kunststofffolien führt, auf Durchlaufsiegelgeräte stand jedoch entgegen, daß es sich bei diesen Geräten, wie erwähnt, um sogenannte Halbautomaten handelt, bei denen also keine gleichmäßig kontinuierliche Zufuhr der zu bedruckenden Siegelränder zu verwirklichen ist. Abgesehen davon, war auch nicht ohne weiteres zu erwarten, daß sich das Thermotransfer-Druckverfahren erfolgreich auch dann anwenden läßt, wenn unter vorteilhafter Vermeidung einer Etikettenübertragung vom Siegelvorgang bereits erwärmte bzw. noch relativ warme Foliensiegelränder bedruckt werden sollen.

Unter einem programmierbaren Thermodruckkopf ist also ein Druckkopf zu verstehen, mit dem die auf dem Farbband auf der druckerabgewandten Seite befindliche, per Wärme und einem gewissen Druck übertragbare Farbe bei in Druckkontakt befindlichen und per Programm am Druckkopf eingestellten Lettern, Zahlen oder auch sonstige Darstellungen auf die Siegelrandfläche des betreffenden Beutels wiedergabegenau übertragen wird. Der auf die gewünschten Daten eingestellte Druckkopf bzw. dessen sogenannten, individuell zur Wirkung bringbaren "dots" bildet also ein einfach programmierbares Druckmedium, das unter Zwischenschaltung des Farbbandes per Thermostransfer die eingestellten Daten überträgt, die, da gewissermaßen eingebrannt, auch unverwischbar ihre Wiedergabe auf den Siegelrändern finden.

Abgesehen von der mittels einer Eingabetastatur zu bewirkenden einfachen Programmierung dessen, was gedruckt werden soll, ist dabei das Gerät bzgl. des Weitertransportes des Farbbandes einfach zu steuern und zwar in Übereinstimmung mit einem in der Durchlaufführung ankommenden Siegelrand, welches Ankommen nicht in gleichmäßigen Abständen erfolgt, da ja die zu versiegelnden Beutel von Hand in das Siegelgerät eingegeben werden. Aus diesem Grunde ist in der Durchlaufführung vor dem Thermodruckkopf ein Siegelrandsensor angeordnet, der über die Gerätesteuerung mit dem Transportantrieb für das Thermofarbband verschaltet ist und gegf. geringfügig zeitversetzt den Thermotransfervorgang beginnen läßt.
Im Gegensatz zum bisher praktizierten Thermotransferdruckverfahren, das einen Synchronlauf von Farband, bspw. Etikettenband und dazu synchronen Druckvorgang verlangt, und zwar im kontinuierlichen Durchlauf, ist beim erfindungsgemäßen Durchlaufsiegelgerät dafür gesorgt, daß diese Synchronizität nur für den eigentlichen Druckvorgang am gerade den Druckkopf passierenden Siegelrand gewährleistet ist.
Ein Umstellen auf eine gegf. gewünschte andere Druckfarbe ist ohne weiteres durch Wechsel des Farbbandes zu bewerkstelligen. Um einen solchen Wechsel oder auch einen Austausch gegen ein neues Farbband so einfach wie möglich durchführen zu können, besteht eine bevorzugte, besonders vorteilhafte und im Einzelnen noch näher zu erläuternde Ausführungsform darin, daß die Spulen mit ihrem Farbband in Form einer auswechselbaren Kassette ausgebildet sind, deren die Spulen umschließenden Kassettenteile durch einen das tangential von den Spulen ab-und auflaufende Farbband führenden Steg verbunden sind, in dem ein Durchgriffsfenster für den druckaktiven Teil des Thermo-Druckkopfes angeordnet ist.

Mit Rücksicht auf die einfache Kassettenaustauschbarkeit ist schließlich das Gerätegehäuse im Bereich der Drucker- und Kassettenanordnung mit einer verschließbaren Zugriffsöffnung versehen und außerdem mit einer Eingabetastatur für die Programmierung.

Das erfindungsgemäße Siegelgerät wird nachfolgend anhand der zeichnerischen Darstellung von Ausführungsbeispielen näher erläutert.

Es zeigt schematisch
- Fig.1: perspektivisch ein Ausführungsbeispiel des Durchlauf-Siegelgerätes;
- Fig.2: schematisch einen Längsschnitt durch das Gerät;
- Fig.3: perspektivisch eine Ausführungsform der Farbbandkassette und
- Fig.4: perspektivisch eine bevorzugte Ausführungsform des Durchlauf-Siegelgerätes.

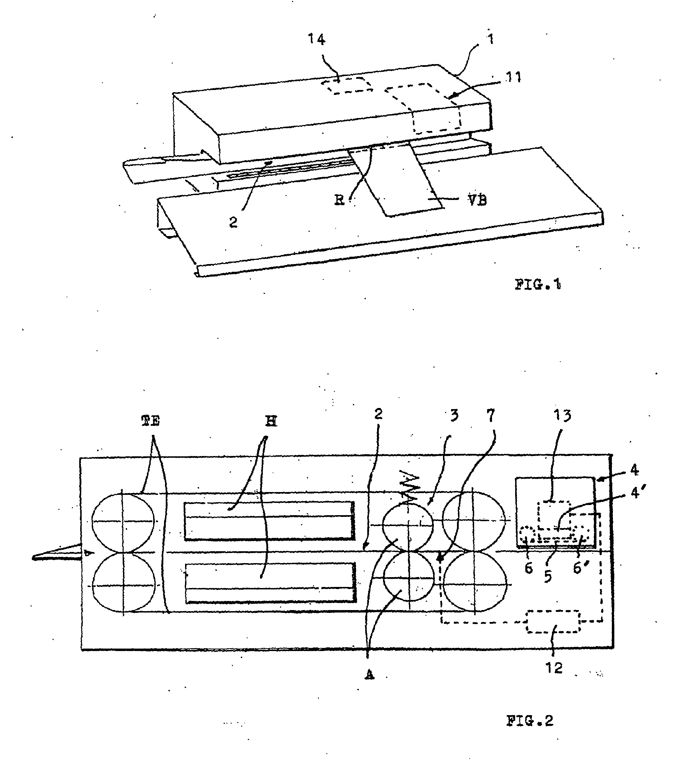

Das Durchlaufsiegelgerät besteht nach wie vor und in bekannter Weise unter Verweis auf die Fig.1,2 aus einem in einer Durchlaufführung 2 des Gerätes angeordneten Schweißwerkzeug 3 zur Erfassung und Verschweißung bzw. Versiegelung der Öffnungsränder R des jeweils passierenden Beutels VB und aus einem im Endbereich der Durchlaufführung 2 des Gerätegehäuses 1 angeordneten Druckwerk 4 zum Bedrucken der versiegelten Öffnungsränder R. Die zu versiegelnden und zu bedruckenden Beutel VB werden dabei nach wie vor links am Gerät angelegt, von einer Transporteinrichtung TE erfaßt und zum Versiegeln und Bedrucken weitertransportiert. Dafür erforderliche Heizeinrichtungen und Andruck- bzw. Siegelrollen sind mit den Bezugszeichen H und A versehen. Das mit einem Sensor 7 verschaltete Druckwerk 4 ist dabei über einem parallel zur und unmittelbar über der Durchlaufführung 2 geführten Farbband 5 angeordnet, und das Farbband 5 ist von ebenfalls über der Durchlaufführung 2 angeordneten Ab- und Auflaufspulen 6,6' geführt, zwischen denen der Druckkopf 4' in Einwirkstellung zum Farbband 5 angeordnet ist.

Für ein solches Durchlaufsiegelgerät ist nun wesentlich, daß das Druckwerk 4 aus einem programmierbaren Thermodruckkopf 4' gebildet und der als Siegelrandsensor ausgebildete Sensor 7 in der Durchlaufführung 2 vor dem Thermodruckkopf 4' angeordnet und mit dem Thermodruckkopf 4' und dem Farbbandantrieb in steuernder Wirkverbindung_ stehend verbunden ist, wobei der Thermodruckkopf 4' mit dem Thermotransfer-Farbband 5 in Bezug auf die Ebene der Durchlaufführung 2 distanzeinstellbar im Gerätegehäuse 1 angeordnet ist.
Zwecksmäßig ist dabei das Gerätegehäuse 1 bedienseitig mit einem Display 14 zur Darstellung der jeweils programmierten Druckdaten versehen.
Dieser via Gerätesteuerung 12 (siehe Fig.2) mit dem Farbbandantrieb verschaltete Sensor 7 sorgt dafür, daß für den ankommenden Beutel bzw. Siegelrand R ein unverbrauchter, neuer Farbbandabschnitt zur Verfügung steht, der sich an den vorgelaufenen, verbrauchten Abschnitt so dicht wie möglich anschließt.
Mit Rücksicht darauf, daß zum Einen beim Thermotransfer-Druckverfahren die zu bedruckende Fläche und das Farbband 5 synchron unter dem stationär angeordneten Thermodruckkopf 4' durchlaufen, wobei die temperierten und vorprogrammierten "dots" 11 des Druckkopfes mit der Durchlaufgeschwindigkeit zur Wirkung gebracht werden und wobei zum Anderen im Gegensatz zum Etikettendruck beim Beutelversiegeln unterschiedlich starke Siegelränder anfallen können und zu bedrucken sind, ist aber immer, und das ist wesentlich, der gleiche, relativ schwache Kontaktdruck für den Farbtransfer einzuhalten sein muß. Dafür ist der Thermodruckkopf 4', wie vorerwähnt, mit dem Thermotransfer-Farbband 5 in Bezug auf die Ebene der Durchlaufführung 2 distanzeinstellbar im Gerätegehäuse 1 angeordnet. Diese Distanzeinstellbarkeit bewegt sich dabei in der Größenordnung von nur Millimeterbruchteilen bis zu wenigen Millimetern. Dies ist nicht besonders dargestellt und auch nicht beonders zu erläutern, da dafür entsprechend konstruktive Möglichkeiten und Elemente ohne weiteres zur Verfügung stehen.

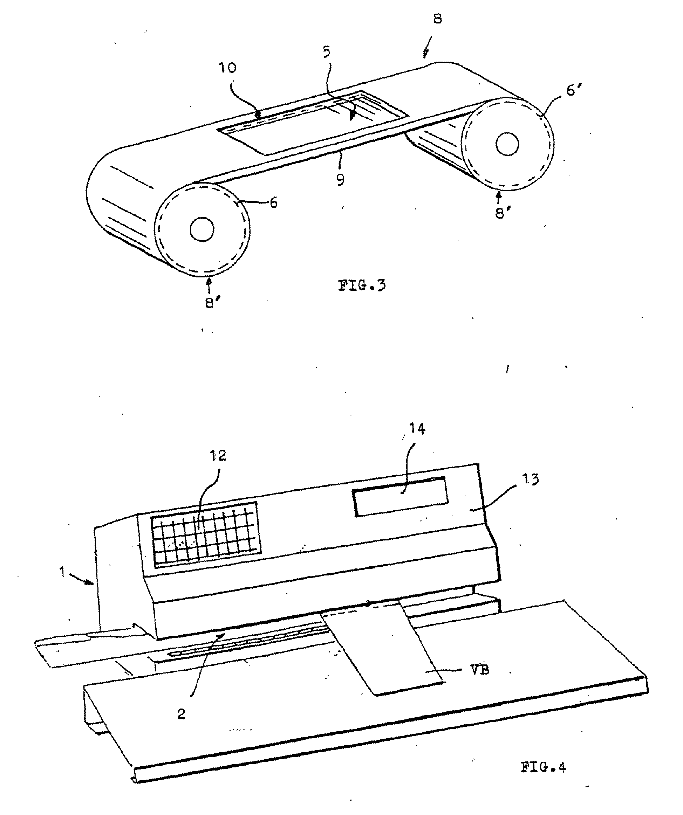

Unter Verweis auf Fig.3 sind die vorerwähnten Spulen 6,6' mit ihrem Thermotransfer-Farbband 5 in Form einer auswechselbaren Kassette 8 ausgebildet, deren die Spulen 6,6' umschließenden Kassettenteile 8' durch einen das tangential von den Spulen 6,6' ab- und auflaufende Farbband 5 führenden Steg 9 verbunden sind, in dem ein Durchgriffsfenster 10 für den druckaktiven Teil des Thermo-Druckkopfes 4' angeordnet ist.

Um einen Farbbandwechsel oder -austausch komplikationslos am Durchlaufsiegelgerät vornehmen zu können, ist das Gerätegehäuse 1 im Bereich der Drucker- und Kassettenanordnung mit einer verschließbaren Zugriffsöffnung 11 versehen, wie dies in Fig.1 gestrichelt angedeutet ist.

Mit Rücksicht auf den programmierbaren Thermodruckkopf 4' ist das Gerätegehäuse 1 bedienseitig mit einem Programmiertableau 12 versehen, wobei dieses Programmiertableau 12 unter Verweis auf Fig.4 vorzugsweise als separates Zubehörteil auf der pultartig geneigten Frontfläche 13 des Gerätegehäuses 1 angeordnet ist, das außerdem ebenfalls bedienseitig mit einem Display 14 zur Darstellung der jeweils programmierten aktuellen Druckdaten versehen ist.

## Patentansprüche

1. Durchlaufsiegelgerät zum Schweißversiegeln der Öffnungsränder (R) von mit Sterilgut gefüllten Verpackungsbeuteln (VB) aus verschweißbarer Kunststofffolie, bestehend aus einem in einer Durchlaufführung (2) des Gerätes angeordneten Schweißwerkzeug (3) zur Erfassung und Verschweißung der Öffnungsränder (R) des jeweils passierenden Beutels (VB) und aus einem im Endbereich der Durchlaufführung (2) des Gerätegehäuses (1) angeordneten Druckwerk (4) zum Bedrucken der versiegelten Öffnungsränder (R), wobei das mit einem Sensor (7) verschaltete Druckwerk (4) über einem parallel zur und unmittelbar über der Durchlaufführung (2) geführten Farbband (5) angeordnet und das Farbband (5) von ebenfalls über der Durchlaufführung (2) angeordneten Ab-und Auflaufspulen (6,6') geführt ist, zwischen denen der Druckkopf (4') in Einwirkstellung zum Farbband (5) angeordnet ist,
**dadurch gekennzeichnet,**
**daß** das Druckwerk (4) aus einem programmierbaren Thermodruckkopf (4') gebildet und der als Siegelrandsensor ausgebildete Sensor (7) in der Durchlaufführung (2) vor dem Thermodruckkopf (4') angeordnet und mit dem Thermodruckkopf (4') und dem Farbbandantrieb in steuernder Wirkverbindung stehend verbunden ist, wobei der Thermodruckkopf (4') mit dem Thermotransfer-Farbband (5) in Bezug auf die Ebene der Durchlaufführung (2) distanzeinstellbar im Gerätegehäuse (1) angeordnet ist.

2. Durchlaufsiewgelgerät nach Anspruch 1,
**dadurch gekennzeichnet,**
**daß** das Gerätegehäuse (1) bedienseitig mit einem Display (14) zur Darstellung der jeweils programmierten Druckdaten versehen ist.

3. Durchlaufsiegelgerät nach Anspruch 1 oder 2,
**dadurch gekennzeichnet,**
**daß** das Gerätegehäuse (1) bedienseitig mit einem Programmiertableau (12) für den Thermodruckkopf (4') versehene ist.

4. Durchlaufsiegelgerät nach Anspruch 3,
**dadurch gekennzeichnet,**
**daß** das Programmiertableau (12) als separates Zubehörteil auf der pultartig geneigten Frontfläche (13) des Gerätegehäuses (1) angeordnet ist.

5. Durchlaufsiegelgerät nach einem der Ansprüche 1 bis 4,
**dadurch gekennzeichnet,**
**daß** die Spulen (6,6') mit ihrem Farbband (5) in Form einer auswechselbaren Kassette (8) ausgebildet sind, deren die Spulen (6,6') umschließenden Kassettenteile (8') durch einen das tangential von den Spulen (6, 6') ab- und auflaufende Farbband (5) führenden Steg (9) verbunden sind, in dem ein Durchgriffsfenster (10) für den druckaktiven Teil des Druckkopfes (4') angeordnet ist.

6. Durchlaufsiegelgerät nach einem der Ansprüche 1 bis 5,
**dadurch gekennzeichnet,**
**daß** das Gerätegehäuse (1) im Bereich der Drucker- und Kassettenanordnung mit einer verschließbaren Zugriffsöffnung (11) versehen ist.

## Claims

1. A continuous sealing device for weld sealing of the opening edges (R) of packing bags (VB filled with sterile material from weldable plastic film, consisting of a welding tool (3) arranged in a through guide (2) of the device for detecting and welding the opening edges (R) of the bag (VB) passing through, and from a printer (4) arranged in the end region of the through guide (2) of the device housing (1) for printing the sealed opening edges (R), wherein the printer (4), connected to a sensor (7), is arranged over an ink ribbon (5) guided parallel with and directly above the through guide (2), and the ink ribbon (5) is guided by up and down running spools (6, 6') also arranged above the through guide (2), between which spools the printing head (4') is arranged in the position of influence relative to the ink ribbon (5),
**characterised in that**
the printer (4) is formed from a programmable thermal printing head (4') and the sensor (7), designed as a sealing edge sensor, is arranged in the through guide (2) in front of the thermal printing head (4'), and is connected to thermal printing head (4') and the ink ribbon drive in a controlling active connection, wherein the thermal printing head (4') is arranged with the thermal transfer ink ribbon (5) so that its distance from the plane of the through guide (2) can be adjusted in the device housing (1).

2. The continuous sealing device according to Claim 1,
**characterised in that**
the device housing (1) is provided on the operating side with a display (14) for representing the programmed printing data.

3. The continuous sealing device according to Claim 1 or 2,
**characterised in that**
the device housing (1) is provided on the operating side with a programming panel (12) for the thermal printing head (4').

4. The continuous sealing device according to Claim 3,
**characterised in that**
the programming panel (12) is arranged as a separate accessory on the front face (13) of the device housing (1) inclined in the manner of a desk.

5. The continuous sealing device according to one of Claims 1 to 4,
**characterised in that**
the spools (6, 6') are designed with an ink ribbon (5) in the form of a replaceable cassette (8) whose cassette parts (8'), enclosing the spools (6, 6'), are connected by a bridge (9) leading through a ink ribbon (5) running up and down tangentially from spools (6, 6'), in which bridge a reach-through window (10) is arranged for the printing active part of the printing head (4').

6. The continuous sealing device according to one of Claims 1 to 5,
**characterised in that**
the device housing (1) is provided with a sealable access opening (11) in the region of the printer and cassette arrangement.

## Revendications

1. Appareil à sceller en continu pour le scellement par soudage des bords d'ouverture (R) de sachets d'emballage (VB) remplis de produit stérile faits d'un film de matière plastique pouvant. être soudé, composé d'un outil de soudage (3) disposé dans un guide de passage (2) de l'appareil pour la saisie et le soudage des bords d'ouverture (R) du sachet (VB) respectivement en train de passer et d'une imprimante (4) disposée au bout du guide de passage (2) du boîtier d'appareil (1) pour l'impression des bords d'ouverture soudés (R), dans lequel l'imprimante (4) branchée à un détecteur (7) est disposée au dessus d'un ruban encré (5) guidé parallèlement à et directement au dessus du guide de passage (2) et le ruban encré (5) est guidé également par des bobines de départ et d'arrivée (6, 6') également disposées au dessus du guide de passage (2) et entre lesquelles la tête d'impression (4') est disposée en position d'intervention par rapport au ruban encré (5),
**caractérisé en ce que**
l'imprimante (4) est constituée d'une tête d'impression thermique programmable (4') et que le détecteur (7) réalisé sous forme de détecteur de bord de scellement est disposé dans le guide de passage (2) avant la tête d'impression thermique (4') et relié en interaction de commande à la tête d'impression thermique (4') et à la commande du ruban encré, la tête d'impression thermique (4') étant disposée avec avec le ruban encré à transfert thermique (5) possibilité de réglage de distance par rapport au plan du guide de passage (2) dans le boîtier de l'appareil (1).

2. Appareil à sceller en continu selon la revendication 1,
**caractérisé en ce que**
le boîtier de l'appareil (1) est équipé côté manoeuvre d'un afficheur (14) pour représenter les données d'impression respectivement programmées.

3. Appareil à sceller en continu selon la revendication 1 ou 2,
**caractérisé en ce que**
le boîtier de l'appareil (1) est équipé côté manoeuvre d'un tableau de programmation (12) pour la tête d'impression thermique (4').

4. Appareil à sceller en continu selon la revendication 3,
**caractérisé en ce que**
le tableau de programmation (12) est disposé sous forme de pièce accessoire séparée sur la surface frontale (13) inclinée à la manière d'un pupitre du boîtier de l'appareil (1).

5. Appareil à sceller en continu selon une des revendications 1 à 4,
**caractérisé en ce que**
les bobines (6, 6') sont réalisées avec leur ruban encré (5) sous forme d'une cassette échangeable (8) à laquelle les pièces de cassette (8') entourant les bobines (6, 6') sont reliées par une traverse (9) partant des et arrivant tangentiellement aux bobines (6, 6') et dans laquelle est pratiquée une fenêtre d'intervention (10) pour la pièce active au niveau impression de la tête d'impression (4') .

6. Appareil à sceller en continu selon une des revendications 1 à 5,
**caractérisé en ce que**
le boîtier de l'appareil (1) est équipé au niveau du dispositif d'imprimante et de cassette d'une ouverture d'intervention pouvant être fermée (11).
